(19) **Europäisches Patentamt**
**European Patent Office**
**Office européen des brevets**

(11) **EP 3 752 408 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **19768745.2**

(22) Anmeldetag: **09.09.2019**

(51) Internationale Patentklassifikation (IPC):
**B62D 7/02** *(2006.01)* **B62D 5/04** *(2006.01)*
**B60K 7/00** *(2006.01)*

(52) Gemeinsame Patentklassifikation (CPC):
**B62D 7/02; B60K 7/0007; B60K 17/043;**
**B60L 15/2036; B60L 15/2054; B62D 5/0418;**
B60K 2007/003; B60K 2007/0084; B60L 2200/36;
B60L 2220/42; B60L 2220/46; B60L 2240/461;
B60L 2240/463; B60L 2260/28; Y02T 10/64;
(Forts.)

(86) Internationale Anmeldenummer:
**PCT/EP2019/073922**

(87) Internationale Veröffentlichungsnummer:
**WO 2020/083555 (30.04.2020 Gazette 2020/18)**

(54) **VERFAHREN ZUR ANSTEUERUNG ZWEIER ELEKTROMOTOREN**

METHOD FOR CONTROLLING TWO ELECTRIC MOTORS

PROCÉDÉ D'ACTIVATION DE DEUX MOTEURS ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.10.2018 DE 102018126701**

(43) Veröffentlichungstag der Anmeldung:
**23.12.2020 Patentblatt 2020/52**

(73) Patentinhaber: **Siemens Aktiengesellschaft**
**80333 München (DE)**

(72) Erfinder:
• **HIRT, Markus**
**78048 Villingen-Schwenningen (DE)**
• **JESKE, Frank**
**78112 St. Georgen (DE)**
• **HORNBERGER, Jörg**
**72280 Dornstetten-Aach (DE)**
• **BITZER, Manfred**
**78112 St. Georgen (DE)**

(74) Vertreter: **Siemens Patent Attorneys**
**Postfach 22 16 34**
**80506 München (DE)**

(56) Entgegenhaltungen:
DE-A1- 102016 007 445 DE-A1- 102016 007 445
DE-U1- 202008 004 190 DE-U1- 202008 004 190

• **POTLURI RAMPRASAD ET AL: "Path-Tracking Control of an Autonomous 4WS4WD Electric Vehicle Using Its Natural Feedback Loops", IEEE TRANSACTIONS ON CONTROL SYSTEMS TECHNOLOGY., vol. 23, no. 5, 1 September 2015 (2015-09-01), US, pages 2053 - 2062, XP093009141, ISSN: 1063-6536, DOI: 10.1109/ TCST.2015.2395994**
• **DAI PENGLEI ET AL: "Force control of a 4WS4WD vehicle for path tracking", 2015 IEEE INTERNATIONAL CONFERENCE ON ADVANCED INTELLIGENT MECHATRONICS (AIM), 1 July 2015 (2015-07-01), pages 238 - 243, XP093009142, ISBN: 978-1-4673-9107-8, DOI: 10.1109/AIM.2015.7222538**

- **LI CHUNSHAN ET AL: "Fault-Tolerant Control for 4WID/4WIS Electric Vehicle Based on EKF and SMC", SAE INTERNATIONAL JOURNAL OF PASSENGER CARS - ELECTRONIC AND ELECTRICAL SYSTEMS, vol. 9, no. 1, 20 May 2016 (2016-05-20), pages 1 - 8, XP093009147, ISSN: 1946-4622, Retrieved from the Internet <URL:http://dx.doi.org/10.4271/2015-01-2846> DOI: 10.4271/2015-01-2846**

(52) Gemeinsame Patentklassifikation (CPC): (Forts.)
Y02T 10/72

**Beschreibung**

Die Erfindung betrifft ein Verfahren zur Ansteuerung eines ersten und zweiten Elektromotors durch welche gemeinsam ein Rad mittels eines Überlagerungsgetriebes um eine Radachse rotiert bzw. angetrieben und um eine Lenkachse lenkbar ist.

Im Stand der Technik ist bereits eine Vielzahl von Verfahren zur Steuerung eines Elektromotors oder zum Antrieb und zur Lenkung eines Rades bekannt. Zumeist wird ein Rad jedoch nur durch einen einzelnen Elektromotor angetrieben und durch einen weiteren einzelnen Elektromotor gelenkt. Dadurch können die Elektromotoren, durch welche die jeweilige Funktion bereitgestellt wird, getrennt voneinander angesteuert werden. Wird die Fahr- bzw. Antriebsfunktion eines Rades und die Lenkfunktion jeweils gemeinsam von zwei oder mehr Elektromotoren bereitgestellt, können die Elektromotoren nicht getrennt voneinander angesteuert werden.

Das Rad mit dem zugehörigen Überlagerungsgetriebe sowie den das Rad antreibenden und lenkenden Elektromotoren kann zu einem Radantriebsmodul zusammengefasst werden, wobei eine Applikation, wie beispielsweise ein Transportschlitten und insbesondere ein fahrerloses Transportfahrzeugs als Teil eines fahrerlosen Transportsystems, beispielsweise vier Radantriebsmodule aufweist. Hierbei ist insbesondere problematisch, dass die Applikation zugleich zwei Motoren je Radantriebsmodul steuern muss und dass die damit einhergehende Rechenlast und die zwischen den Radantriebsmodulen und einer zentralen Steuerung zu übermittelnden Datenmengen entsprechend umfangreich sind.

Unterscheiden sich die verwendeten Radantriebsmodule voneinander und weisen beispielsweise unterschiedliche Leistungsdaten auf oder setzen die Lenk- und Antriebsfunktionalität auf unterschiedliche Art und Weise um, muss die zentrale Steuerung jeweils auf die verwendeten Radantriebsmodule angepasst werden.

Weitere auf einem Überlagerungsgetriebe basierende Radantriebsmodule sind beispielsweise aus den Dokumenten DE 10 2016 007445 A1 und DE 20 2008 004190 U1 bekannt.

Der Erfindung liegt deshalb die Aufgabe zugrunde, die vorgenannten Nachteile zu überwinden und ein Verfahren zur Steuerung bzw. Ansteuerung zweier ein Rad gemeinsam antreibenden und lenkenden Elektromotoren durch sich auf das Rad beziehende Eingangssignale bereitzustellen.

Diese Aufgabe wird durch die Merkmalskombination gemäß Patentanspruch 1 gelöst.

Erfindungsgemäß wird ein Verfahren zur Ansteuerung einer Vorrichtung mit zumindest zwei Radantriebsmodulen gemäß den Merkmalen des Hauptanspruchs vorgeschlagen, wobei ein Radantriebsmodul jeweils einen ersten Elektromotor und einen zweiten Elektromotor aufweist. Das Radantriebsmodul umfasst neben dem ersten und dem zweiten Elektromotor ein Rad und ein Überlagerungsgetriebe, wobei das Rad mittels des Überlagerungsgetriebes von dem ersten und dem zweiten Elektromotor gemeinsam um eine Radachse antreibbar und um eine zu der Radachse orthogonale Lenkachse lenkbar ist. Bei dem erfindungsgemäßen Verfahren werden aus Rad-Sollwerten, die das Antreiben und/oder das Lenken des Rades kennzeichnen, elektrische Steuersignale zur Ansteuerung des ersten und zweiten Elektromotors bestimmt.

Umfasst eine Applikation d.h. die erfindungsgemäß vorgeschlagene Vorrichtung, wie ein fahrerloses Transportfahrzeug, zumindest zwei Radantriebsmodule und beispielsweise vier Radantriebsmodule, muss die Applikation bzw. eine Steuerung der Applikation, welche als Applikationselektronik bezeichnet werden kann, den speziellen Aufbau seiner einzelnen Radantriebsmodule oder deren Leistungsdaten nicht berücksichtigen. Die Applikationselektronik übermittelt erfindungsgemäß an die jeweiligen Radantriebsmodule lediglich die Rad-Sollwerte, welche durch das Verfahren zur Ansteuerung der beiden Elektromotoren dann angepasst auf das jeweilige Radantriebsmodul in Steuersignale zur Ansteuerung der Elektromotoren umgesetzt werden.

Die Rad-Sollwerte sind eine Paarung von Werten, welche einen Lenkwinkel des Rades und eine Rotationsgeschwindigkeit des Rades umfassen. Insbesondere können diese Werte daher eine Paarung aus einem Radsolllenkwinkel und einer Radsolldrehzahl oder einer Radsollgeschwindigkeit oder einem Radsolldrehmoment sein.

Zudem ist erfindungsgemäß vorgesehen, dass die Rad-Sollwerte aus einem von dem Rad oder dem Radantriebsmodul zurückzulegenden Pfad und einer Geschwindigkeit des Rades oder des Radantriebsmodul entlang des Pfades bestimmt werden, wobei der Pfad die zurückzulegende Strecke und den Streckenverlauf berücksichtigt.

Zur Ansteuerung der Motoren ist bei einer vorteilhaften Verfahrensvariante vorgesehen, dass aus den Steuersignalen für den ersten und zweiten Elektromotor von einer jeweiligen dem ersten oder dem zweiten Elektromotor zugeordneten Motorsteuerung eine Motorsolldrehzahl, eine Motorsollposition oder ein Motorsolldrehmoment bestimmt bzw. abgeleitet wird und der jeweilige Elektromotor durch die jeweilige Motorsteuerung zur Erreichung der Motorsolldrehzahl, der Motorsollposition oder des Motorsolldrehmoments angesteuert wird.

Die Motorsolldrehzahl des jeweiligen Elektromotors wird vorzugsweise aus einer ersten Motorsolldrehzahl zum Erreichen einer Fahrgeschwindigkeit und einer zweiten Motorsolldrehzahl zum Erreichen eines Lenkwinkels bestimmt. Für die Motorsolldrehzahlen des ersten Elektromotors (Motorsolldrehzahl$_{M1}$) gilt also:

$$Motorsolldrehzahl_{M1}(t) = Motorsolldrehzahl_{Fahren}(t) + Motorsolldrehzahl_{Lenken}(t)$$

Die Motorsolldrehzahl für den ersten Motor ergibt sich also aus der Addition der Motorsolldrehzahl für das Fahren und der Motorsolldrehzahl für das Lenken.

Dabei ist die Motorsolldrehzahl$_{Fahren}$ der Anteil der Motorsolldrehzahl$_{M1}$, der zum Erreichen der vorbestimmten Geschwindigkeit des Rades bzw. des Radantriebsmoduls notwendig ist und die Motorsolldrehzahl$_{Lenken}$ der Anteil der Motorsolldrehzahl$_{M1}$, der zur Einstellung des vorbestimmten Lenkwinkels des Rades notwendig ist.

Wird die Antriebs- und Lenklast auf den ersten und zweiten Elektromotor verteilt, gelten für die die Motorsolldrehzahlen des zweiten Elektromotors (Motorsolldrehzahl$_{M2}$) analog:

$$Motorsolldrehzahl_{M2}(t) = Motorsolldrehzahl_{Fahren}(t) - Motorsolldrehzahl_{Lenken}(t)$$

Die Motorsolldrehzahl für den zweiten Motor ergibt sich also aus der Subtraktion der Motorsolldrehzahl für das Lenken von der Motorsolldrehzahl für das Fahren.

Eine vorteilhafte Variante sieht zudem vor, dass die Getriebeübersetzung des ersten und des zweiten Elektromotors durch das Überlagerungsgetriebe auf das Rad gleich ist. Dadurch ist auch die Motorsolldrehzahl zum Erreichen einer Fahrgeschwindigkeit für den ersten und den zweiten Elektromotor bei einer gleichen Getriebeübersetzung des Überlagerungsgetriebes für den ersten und zweiten Elektromotor gleich. Insbesondere wird die Motorsolldrehzahl für das Fahren aus einer Radsolldrehzahl des Rades und der Getriebeübersetzung des Überlagerungsgetriebes bestimmt, so dass gilt:

$$Motorsolldrehzahl_{Fahren}(t) = Radsolldrehzahl(t) \cdot Getriebeübersetzung_{Fahren}$$

Die Motorsolldrehzahl für das Fahren ergibt sich also aus der Multiplikation der Radsolldrehzahl und der Getriebeübersetzung für das Fahren.

Die Motorsolldrehzahl zum Erreichen des Lenkwinkels für den zweiten Elektromotor bei einer gleichen Getriebeübersetzung des Überlagerungsgetriebes für den ersten und zweiten Elektromotor ist bei einer gleichmäßigen Verteilung der umzusetzenden Lenkung der negative Wert der Motorsolldrehzahl zum Erreichen des Lenkwinkels für den ersten Elektromotor. Abhängig von der Übersetzung der Elektromotoren oder einer Einbaurichtung der Elektromotoren, können Werte der Motorsolldrehzahlen auch gleich und nicht negativ zueinander sein, wobei die durch die Elektromotoren angetriebenen Antriebszahnkränze des Überlagerungsgetriebes sich bei einer reinen Lenkbewegung ohne Fahrbewegung im Gleichlauf und bei einer Fahrbewegung mit gleichzeitiger Lenkbewegung im Gegenlauf mit einer Drehzahldifferenzbewegen. Die Motorsolldrehzahl zum Erreichen des Lenkwinkels für den ersten Elektromotor wird aus einer Änderung des Radlenkwinkels des Rades um die Lenkachse bestimmt, so dass gilt:

$$Motorsolldrehzahl_{Lenken}(t) = Motorsolldrehzahl_{M1Lenken}(t)$$
$$= - Motorsolldrehzahl_{M2Lenken}(t)$$
$$= dRadlenkwinkel(t) \cdot$$
$$Getriebeübersetzung_{Lenken} \cdot (2\pi \cdot T_A)^{-1}$$

Die Motorsolldrehzahl$_{Lenken}$ wird dabei jeweils in SI-Einheiten, also in Umdrehungen pro Sekunde bestimmt.

Dass die Motorsolldrehzahl zum Lenken für den zweiten Motor der negativen Motorsolldrehzahl zum Lenken für den ersten Motor entspricht, gilt insbesondere bei einer reinen Lenkbewegung ohne Fahrbewegung. Ansonsten wird vorzugsweise die Motorsolldrehzahl für das Lenken zu der Motorsolldrehzahl für das Fahren addiert bzw. von ihr subtrahiert um eine Drehzahldifferenz an den Antriebszahnkränzen des Überlagerungsgetriebes zu erreichen.

Eine vorteilhafte Variante sieht dabei desweiteren vor, dass sich die Änderung des Radlenkwinkels aus einem tatsächlichen Radlenkwinkel (*Radlenkwinkel$_{Ist}$*) und einem vorgegebenen Radlenkwinkel (*Radlenkwinkel$_{soll}$*) wie folgt ergibt:

$$dRadlenkwinkel(t) = Radlenkwinkel_{Soll}(t + T_A) - Radlenkwinkel_{Ist}(t)$$

Der Wert $T_A$ entspricht dabei dem Aufrufintervall und beträgt beispielsweise 1ms, wobei die Änderung des Radlenkwinkels in rad bestimmt wird. Darüber hinaus ist vorgesehen, dass sich der tatsächliche Radlenkwinkel aus den Positionen der Motoren und der Getriebeübersetzung ergibt, wobei die Positionen der Motoren bzw. die Motorpositionen absolute Positionen sind, welche durch einen Multiturnsensor ermittelt wurden oder direkt am jeweiligen Motor ermittelt werden. Dabei gilt:

$$Radlenkwinkel_{Ist}(t) = (Motorposition_{M1}(t) - Motorposition_{M2}(t)) \cdot$$

$$(2 \cdot Getriebeübersetzung_{Lenken}).$$

Als Motorposition werden hierbei insbesondere der absolute Drehwinkel der Abtriebswellen der Motoren in rad von einer Ausgangsposition aus bestimmt.

Ein weiterer Aspekt der Erfindung betrifft das Radantriebsmodul. Dieses umfasst das Rad, das Überlagerungsgetriebe sowie den ersten Elektromotor und den zweiten Elektromotor, die durch das Verfahren nach einem der vorhergehenden Ansprüche angesteuert sind. Der erste und der zweite Elektromotor sind ausgebildet, das Rad gemeinsam mittels des Überlagerungsgetriebes um eine Radachse anzutreiben und um eine zu der Radachse orthogonale Lenkachse zu lenken. Ferner umfasst das Radantriebsmodul eine erste Motorelektronik zur Ansteuerung des ersten Elektromotors und eine zweite Motorelektronik zur Ansteuerung des zweiten Elektromotors sowie eine Zentralelektronik, die mit der ersten und zweiten Motorelektronik einen Signalaustausch ermöglichend verbunden ist. Zur Steuerung des ersten und zweiten Elektromotors zum Antrieb des Rades um die Radachse und Lenkung des Rades um die Lenkachse umfasst das Radantriebsmodul eine Steuerungslogik. Um die Steuerung der Elektromotoren flexibel und für die jeweils verwendeten Elektromotoren flexibel anpassen zu können, ist vorgesehen, dass die Steuerungslogik durch die erste und zweite Motorelektronik, die Zentralelektronik, eine Applikationselektronik, welche einen Signalaustausch ermöglichend mit der Zentralelektronik verbunden ist, oder gemeinsam durch die Zentralelektronik und die erste und zweite Motorelektronik bereitgestellt ist. Die Steuerungslogik ist hierbei ausgebildet, Rad-Sollwerte von einer übergeordneten Steuerung, beispielsweise einer Steuerung der Applikation, zu empfangen und aus den Rad-Sollwerten die elektrische Steuersignale für den ersten und zweiten Elektromotor zu bestimmen und die Steuersignale an den ersten und/oder zweiten Elektromotor zu übermitteln.

Um das Radantriebsmodul schnell und kosteneffizient warten und individualisieren zu können ist es zudem vorteilhaft, wenn das Radantriebsmodul in weitere als Modul austauschbare Baugruppen unterteilt ist. Beispielsweise kann die Zentralelektronik eine Zentralbaugruppe bilden und der erste und zweite Elektromotor mit der jeweils zugehörigen ersten bzw. zweiten Motorsteuerung eine jeweilige erste bzw. zweite Motorbaugruppe.

An die übergeordnete Applikation werden durch das Radantriebsmodul zudem vorzugsweise Zustandsinformationen des Rades und/oder der Elektromotoren weitergeleitet. Um zu verifizieren, dass es sich bei den weitergeleiteten Zustandsinformationen tatsächlich um die korrekten Zustandsinformationen handelt und nicht, beispielsweise durch den Defekt eines Sensors, um falsche Zustandsinformationen, können Informationsquellen, wie beispielsweise Sensoren, redundant vorhanden sein. Die von den Sensoren und Aktoren zur Verfügung stehenden Zustandsinformationen können durch eine Sicherheitslogik umgerechnet und miteinander verglichen werden, um die Zustandsinformationen zu plausibilisieren und verifizieren und solche plausibilisierte bzw. tatsächliche Zustandsinformationen an die übergeordnete Applikation bzw. an die Steuerungslogik zur Steuerung der Elektromotoren weiterzuleiten.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1    ein von einem ersten und einem zweiten Elektromotor durch ein Überlagerungsgetriebe angetriebenes Rad;

Fig. 2    eine schematische Darstellung einer Umsetzung des Verfahrens zur Ansteuerung eines ersten und zweiten Elektromotors durch eine Zentralelektronik des Radantriebsmoduls.

Die Figuren sind beispielhaft schematisch. Gleiche Bezugszeichen in den Figuren weisen auf gleiche funktionale und/oder strukturelle Merkmale hin.

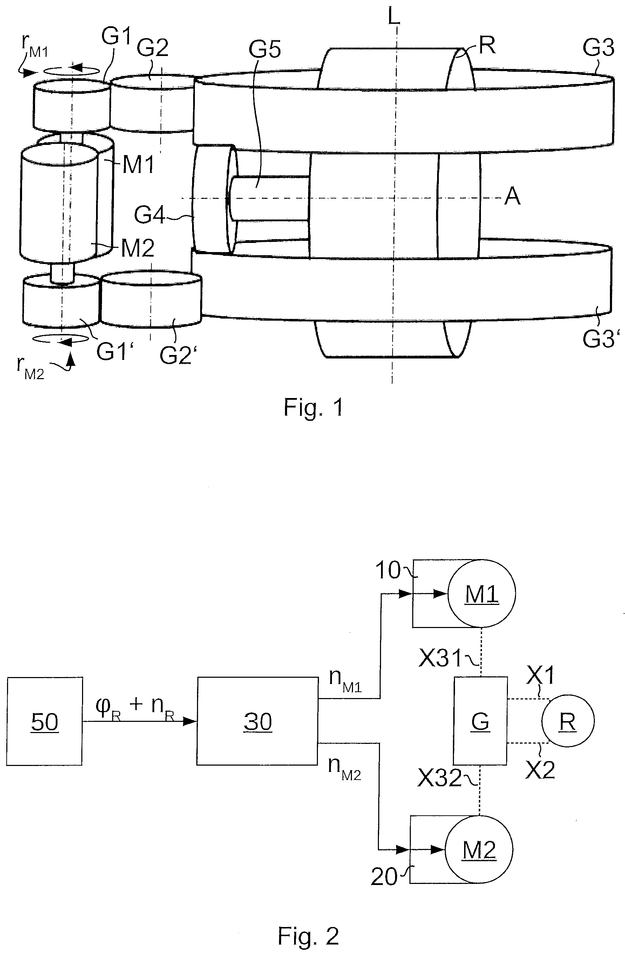

In Figur 1 sind das Rad R, der erste und zweite Elektromotor M1, M2 sowie das Überlagerungsgetriebe G zum Antrieb und Lenken des Rades R durch die beiden Elektromotoren M1, M2 dargestellt. Dabei wird durch die Figur 1 nur eine mögliche Ausbildungsalternative des Antriebs des Rades R um die Radachse A und die Lenkachse L durch den ersten und zweiten Elektromotor M1, M2 illustriert. Beispielsweise kann das Rad R unterhalb der Antriebszahnkränze G3, G3' angeordnet sein oder die Elektromotoren M1, M2 eine andere Übersetzung auf die Antriebszahnkränze G3, G3' sowie eine andere Orientierung aufweisen. Das Überlagerungsgetriebe G umfasst in dem dargestellten Beispiel die Ritzel G1, G1', die Zwischenräder G2, G2', die Antriebszahnkränze G3, G3' sowie das Abtriebszahnrad G4 und die Abtriebswelle G5. Darüber hinaus kann das Überlagerungsgetriebe G bei anderen Ausführungsvarianten auch noch weitere Komponenten umfassen.

Der erste und der zweite Elektromotor M1, M2 treiben den ersten und den zweiten Antriebszahnkranz G3, G3' an. Der erste Elektromotor M1 ist bei der gezeigten Ausführungsform entgegengesetzt zu dem zweiten Elektromotor M2 angeordnet, wobei die Elektromotoren M1, M2 jeweils ein eigenes Motorgetriebe umfassen können. Über jeweils eine Motorwelle sind die Elektromotoren M1, M2 mit jeweils einem Ritzel G1, G1' verbunden.

Das erste Ritzel G1 greift mit seiner Verzahnung in eine Verzahnung eines ersten Zwischenrades G2 ein, welches mit seiner Verzahnung in eine Antriebsverzahnung des ersten Antriebszahnkranzes G3 eingreift, so dass durch eine Rotation des ersten Ritzels G1 der erste Antriebszahnkranz G3 von dem ersten Elektromotor M1 angetrieben um die Rotationsachse bzw. Lenkachse L rotierbar ist.

Analog gilt das gleiche für den zweiten Antriebszahnkranz G3'. Das zweite Ritzel G1' greift mit seiner Verzahnung in eine Verzahnung eines zweiten Zwischenrades G2' ein, welches mit seiner Verzahnung in eine Antriebsverzahnung des zweiten Antriebszahnkranzes G3' eingreift, womit durch eine Rotation des zweiten Ritzels G1' der zweite Antriebszahnkranz G3' von dem zweiten Elektromotor M2 angetrieben um die Rotationsachse bzw. Lenkachse L rotierbar ist.

Zwischen dem ersten und dem zweiten Antriebszahnkranz G3, G3' ist ein Abtriebszahnrad G4 angeordnet, welches mit seiner Verzahnung sowohl in eine zu dem Abtriebszahnrad G4 weisende Verzahnung des ersten Antriebszahnkranzes G3 als auch in eine zu dem Abtriebszahnrad G4 weisende Verzahnung des zweiten Antriebszahnkranzes G3' eingreift. Die Rotation des Abtriebszahnrades G4 (dritte Rotation) ist folglich sowohl von der Rotation des ersten Antriebszahnkranzes G3 (erste Rotation) als auch von der Rotation des zweiten Antriebszahnkranzes G3' (zweite Rotation) bestimmt.

Von dem Abtriebszahnrad G4 erstreckt sich eine mit dem Abtriebszahnrad G4 drehfest verbundene Abtriebswelle G5 entlang einer Radachse A in Richtung der Rotationsachse bzw. der Lenkachse L der Antriebszahnkränze G3, G3'. An einer von dem Abtriebszahnrad G4 entlang der Radachse A beabstandeten Seite ist das Rad R drehfest mit der Abtriebswelle G5 verbunden, wodurch eine Rotation (dritte Rotation) des Abtriebszahnrades G4 über die Abtriebswelle G5 auf das Rad R übertragen wird. Das Rad R ist wie dargestellt abschnittsweise zwischen dem ersten Antriebszahnkranz G3 und dem zweiten Antriebszahnkranz G3' aufgenommen, welche entlang ihrer Rotationsachse L beabstandet sind und zwischen sich einen Radaufnahmeraum aufspannen. Beide Antriebszahnkränze G3, G3' weisen eine sich entlang der Rotationsachse L durch den jeweiligen Antriebszahnkranz G3, G3' erstreckende Kranzöffnung auf. Das Rad R erstreckt sich zumindest auf seiner dem Boden zugewandten Seite durch die jeweilige Kranzöffnung, womit das Rad R im Wesentlichen fünf Abschnitte aufweist. Ein erster Abschnitt, mit welchen das Rad R zwischen den Antriebszahnkränzen angeordnet ist, zwei zweite Abschnitte, mit welchen das Rad R in den Kranzöffnungen der Antriebszahnkränze G3, G3' angeordnet ist, und zwei dritte Abschnitte, mit welchen das Rad R entlang der Rotationsachse L außerhalb der Antriebszahnkränze G3, G3' liegt. Die Anordnung des Rades R in dem Radaufnahmeraum führt zu drei vorteilhaften Effekten. Der Bauraum des Radantriebsmoduls wird deutlich reduziert, da das Rad R bei einer Lenkbewegung die Antriebszahnkränze G3, G3' nicht umlaufen muss, und der mögliche Lenkwinkel wird erweitert, da das Rad R in den Antriebszahnkränzen G3, G3' um 360° rotiert werden kann, ohne dass die Lenkbewegung bzw. Rotation um die Rotationsachse L durch die Zwischenräder G2, G2' begrenzt ist. Hinzukommt, dass das Rad R von dem Radantriebsmodul 1 bzw. von dem ersten und zweiten Antriebszahnkränzen G3, G3' geschützt wird, da diese einen Käfig um das Rad R bilden.

Die in Figur 1 eingezeichnete Rotationsrichtung des ersten Motors $r_{M1}$ und die Rotationsrichtung des zweiten Motors $r_{M2}$ sind so zueinander gerichtet, dass die Antriebszahnkränze G3, G3' bei einer reinen Fahrbewegung im Gegenlauf zueinander rotieren und dadurch das Rad R nicht um die Lenkachse L rotiert wird.

In Figur 2 ist ein Teilbereich des Radantriebsmoduls schematisch dargestellt. Durch den Antrieb des Rades R um die Lenkachse L und die Radachse A wird am bzw. durch das Rad R eine Fahrfunktion X2 und eine Lenkfunktion X1 bereitgestellt. Zur Bereitstellung der Lenk- und Fahrfunktion X1, X2 mittels des Überlagerungsgetriebes G, wird dieses durch den ersten und zweiten Elektromotor M1, M2 mittels der ersten und zweiten Wirkverbindung X31, X32 angetrieben.

Bei einem Anwendungsfall, wie im Bereich der Logistik beispielsweise ein Transportschlitten, weist die jeweilige Applikation zumindest zwei und vorzugsweise vier Radantriebsmodule auf. Durch die Steuerung eines solchen Transportschlittens müssen daher acht Motoren zum Antrieb und zur Lenkung des Transportschlittens gesteuert werden.

Um die Steuerung des Transportschlittens zu entlasten ist daher bei der gezeigten Ausführungsvariante vorgesehen, dass die Steuerung 50 des Transportschlittens an jedes seiner Radantriebsmodule jeweils den Radsolllenkwinkel $\varphi_R$ des Rades R sowie die Radsolldrehzahl $n_R$ des Rades R beispielsweise über eine Bus-Leitung übermittelt.

Vorteilhaft ist hierbei auch, da für die Steuerung 50 der Applikation bzw. des Transportschlittens unerheblich ist, wie die Elektromotoren M1, M2 angesteuert werden und ob nur ein Elektromotor zur Lenkung und ein Elektromotor zum Antrieb oder beide Elektromotoren M1, M2 zu Antrieb und Lenkung beitragen.

Das Verfahren zur Ansteuerung des ersten und zweiten Elektromotors M1, M2 ist bei der dargestellten schematischen Ausbildung durch die Zentralelektronik 30 implementiert. Die Eingangswerte, bzw. Radsolllenkwinkel $\varphi_R$ und Radsolldrehzahl $n_R$ werden an die Zentralelektronik 30 übermittelt und in eine Motorsolldrehzahl des ersten Elektromotors M1 (Motorsolldrehzahl$_{M1}$) bzw. $n_{M1}$ sowie in eine Motorsolldrehzahl des zweiten Elektromotors M2 (Motorsolldrehzahl$_{M2}$) bzw. $n_{M2}$ umgerechnet. Die beiden Motorsolldrehzahlen $n_{M1}$ und $n_{M2}$ werden von der Zentralelektronik 30 an die jeweilige Motorelektronik 10, 20 weitergeleitet und durch diese wird der jeweilige Elektromotor M1, M2 zur Erreichung der jeweiligen Motorsolldrehzahl $n_{M1}$, $n_{M2}$ angesteuert.

**Patentansprüche**

1. Verfahren zur Ansteuerung einer Vorrichtung mit zumindest zwei Radantriebsmodulen, welche jeweils einen ersten Elektromotor (M1) und einen zweiten Elektromotor (M2) aufweisen und jeweils ein Rad (R) und ein Überlagerungsgetriebe (G) umfassen,

   wobei das Rad (R) mittels des Überlagerungsgetriebes (G) von dem ersten und dem zweiten Elektromotor (M1, M2) gemeinsam um eine Radachse (A) antreibbar und um eine zu der Radachse (A) orthogonale Lenkachse (L) lenkbar ist,
   wobei eine Applikationselektronik (50) an jedes Randantriebsmodul jeweils lediglich Rad-Sollwerte übermittelt werden,
   wobei eine jeweilige Zentralelektronik (30) des jeweiligen Radantriebsmoduls aus Rad-Sollwerten, die das Antreiben und/oder das Lenken des Rades (R) kennzeichnen, elektrische Steuersignale zur Ansteuerung des ersten und zweiten Elektromotors (M1, M2) bestimmt werden, wobei
   die Rad-Sollwerte ein Radsolllenkwinkel und eine Radsolldrehzahl oder eine Radsollgeschwindigkeit oder ein Radsolldrehmoment sind und wobei
   die Rad-Sollwerte aus einem von dem Rad (R) oder dem Radantriebsmodul zurückzulegenden Pfad und einer Geschwindigkeit des Rades (R) oder des Radantriebsmodul entlang des Pfades bestimmt werden, wobei der Pfad die zurückzulegende Strecke und den Streckenverlauf berücksichtigt.

2. Verfahren nach Anspruch 1, wobei
   aus den Steuersignalen für den ersten und zweiten Elektromotor (M1, M2) von einer jeweiligen dem ersten oder dem zweiten Elektromotor (M1, M2) zugeordneten Motorsteuerung eine Motorsolldrehzahl, eine Motorsollposition oder ein Motorsolldrehmoment bestimmt und der jeweilige Elektromotor (M1, M2) zur Erreichung der Motorsolldrehzahl, der Motorsollposition oder des Motorsolldrehmoments angesteuert werden.

3. Verfahren nach dem vorhergehenden Anspruch, wobei
   die Motorsolldrehzahl des jeweiligen Elektromotors (M1, M2) aus einer ersten Motorsolldrehzahl zum Erreichen einer Fahrgeschwindigkeit und einer zweiten Motorsolldrehzahl zum Erreichen eines Lenkwinkels bestimmt wird, so dass gilt:

$$Motorsolldrehzahl_{M1}(t) = Motorsolldrehzahl_{Fahren}(t) + Motorsolldrehzahl_{Lenken}(t) \text{ und}$$

$$Motorsolldrehzahl_{M2}(t) = Motorsolldrehzahl_{Fahren}(t) - Motorsolldrehzahl_{Lenken}(t).$$

4. Verfahren nach dem vorhergehenden Anspruch, wobei
   die Motorsolldrehzahl zum Erreichen einer Fahrgeschwindigkeit für den ersten und den zweiten Elektromotor (M1, M2) bei einer gleichen Getriebeübersetzung des Überlagerungsgetriebes (G) für den ersten und zweiten Elektromotor (M1, M2) gleich ist und sich insbesondere aus einer Radsolldrehzahl des Rades (R) und der Getriebeübersetzung des Überlagerungsgetriebes (G) bestimmt, so dass gilt:

$$Motorsolldrehzahl_{Fahren}(t) = Radsolldrehzahl(t) \cdot Getriebeübersetzung_{Fahren}$$

5. Verfahren nach dem vorhergehenden Anspruch 3 oder 4, wobei
   die Motorsolldrehzahl zum Erreichen des Lenkwinkels für den zweiten Elektromotor (M2) bei einer gleichen Getriebeübersetzung des Überlagerungsgetriebes (G) für den ersten und zweiten Elektromotor (M1, M2) der negative Wert der Motorsolldrehzahl zum Erreichen des Lenkwinkels für den ersten Elektromotor (M1) ist und die Motorsolldrehzahl zum Erreichen des Lenkwinkels für den ersten Elektromotor (M1) aus einer Änderung des Radlenkwinkels des Rades (R) um die Lenkachse (L) bestimmt wird, so dass gilt:

$$Motorsolldrehzahl_{Lenken}(t) = Motorsolldrehzahl_{M1Lenken}(t)$$

$$= - Motorsolldrehzahl_{M2Lenken}(t)$$

$$= dRadlenkwinkel(t) \cdot$$

$$Getriebe\ddot{u}bersetzung_{Lenken} \cdot (2\pi \cdot T_A)^{-1}$$

6. Verfahren nach dem vorhergehenden Anspruch, wobei sich die Änderung des Radlenkwinkels wie folgt ergibt:

$$dRadlenkwinkel(t) = Radlenkwinkel_{Soll}(t + T_A) - Radlenkwinkel_{Ist}(t)$$

mit $T_A$ *als Aufrufintervall und wobei*

$$Radlenkwinkel_{Ist}(t) = (Motorposition_{M1}(t) - Motorposition_{M2}(t)) \cdot$$

$$(2 \cdot Getriebe\ddot{u}bersetzung_{Lenken}).$$

7. Vorrichtung mit einer Applikationselektronik (50) und zumindest zwei Radantriebsmodulen, jeweils umfassend ein Rad (R), ein Überlagerungsgetriebe (G), eine Zentralelektronik (30) sowie einen ersten Elektromotor (M1) und einen zweiten Elektromotor (M2), wobei die Applikationselektronik (50) und jede Zentralelektronik (30) so eingerichtet sind, dass die Vorrichtung gemäß dem Verfahren nach einem der vorhergehenden Ansprüche angesteuert werden kann, wobei

der erste und der zweite Elektromotor (M1, M2) ausgebildet sind, das Rad (R) gemeinsam mittels des Überlagerungsgetriebes (G) um eine Radachse (A) anzutreiben und um eine zu der Radachse (A) orthogonalen Lenkachse (L) zu lenken,

das Radantriebsmodul eine erste Motorelektronik (10) zur Ansteuerung des ersten Elektromotors (M1) und eine zweite Motorelektronik (20) zur Ansteuerung des zweiten Elektromotors (M2) sowie eine Zentralelektronik (30) umfasst, die mit der ersten und zweiten Motorelektronik (10, 20) einen Signalaustausch ermöglichend verbunden ist, und wobei

das Radantriebsmodul eine Steuerungslogik zur Steuerung des ersten und zweiten Elektromotors (M1, M2) zum Antrieb des Rades (R) um die Radachse (A) und Lenkung des Rades (R) um die Lenkachse (L) umfasst, welche durch die erste und zweite Motorelektronik (10, 20), die Zentralelektronik (30), die Applikationselektronik (50), welche einen Signalaustausch ermöglichend mit der Zentralelektronik (30) verbunden ist, bereitgestellt ist, wobei

die Steuerungslogik ausgebildet ist, aus den Rad-Sollwerten die elektrische Steuersignale für den ersten und zweiten Elektromotor (M1, M2) zu bestimmen und die Steuersignale an den ersten und/oder zweiten Elektromotor (M1, M2) zu übermitteln.

## Claims

1. Method for controlling an apparatus with at least two wheel drive modules, each of which has a first electric motor (M1) and a second electric motor (M2) and comprises a wheel (R) and a superimposition gear unit (G) in each case,

wherein the wheel (R) can be driven simultaneously by the first and the second electric motor (M1, M2) by means of the superimposition gear unit (G) about a wheel axle (A) and can be steered about a steering axis (L) which is orthogonal to the wheel axle (A),

wherein target wheel values only are transmitted to an application electronics system (50) at each wheel drive module in each case,

wherein a respective central electronics system (30) of the respective wheel drive module determines electrical control signals for controlling the first and second electric motor (M1, M2) from target wheel values which indicate the driving and/or the steering of the wheel (R), wherein

the target wheel values are a target wheel steering angle and a target wheel rotation rate or target wheel speed or a target wheel torque and wherein

the target wheel values are determined from a path to be covered by the wheel (R) or the wheel drive module and a speed of the wheel (R) or the wheel drive module along the path, wherein the path takes into account the route to be covered and the course of the route.

2. Method according to claim 1, wherein
a target motor rotation rate, a target motor position or a target motor torque is determined from the control signals for the first and second electric motor (M1, M2) from a respective motor control assigned to the first or the second electric motor (M1, M2), and the respective electric motor (M1, M2) is controlled to reach the target motor rotation rate, the target motor position or the target motor torque.

3. Method according to the preceding claim, wherein
the target motor rotation rate of the respective electric motor (M1, M2) is determined from a first target motor rotation rate to reach a driving speed and from a second target motor rotation rate to reach a steering angle, such that the following applies:

$$Target\ motor\ rotation\ rate_{M1}(t)\ =\ target\ motor\ rotation$$
$$rate_{drive}(t)\ +$$
$$target\ motor\ rotation$$
$$rate_{steer}(t)\ and$$

$$Target\ motor\ rotation\ rate_{M2}(t)\ =\ target\ motor\ rotation$$
$$rate_{drive}(t)\ -$$
$$target\ motor\ rotation$$
$$rate_{steer}(t).$$

4. Method according to one of the preceding claims, wherein
to reach a driving speed for the first and second electric motor (M1, M2), at an equal gear ratio of the superimposition gear unit (G), the target motor rotation rate is the same for the first and second electric motor (M1, M2) and is determined in particular from a target wheel rotation rate of the wheel (R) and the gear ratio of the superimposition gear unit (G), such that the following applies:

$$target\ motor\ rotation\ rate_{drive}(t)\ =\ target\ wheel\ rotation$$
$$rate(t)\ \cdot\ gear\ ratio_{drive}$$

5. Method according to one of the preceding claims 3 or 4, wherein
to reach the steering angle for the second electric motor (M2), at an equal gear ratio of the superimposition gear unit (G), the target motor rotation rate is the negative value of the target motor rotation rate for reaching the steering angle for the first electric motor (M1) for the first and second electric motor (M1, M2) and, to reach the steering angle for the first electric motor (M1), the target motor rotation rate is determined from a change to the wheel steering angle of the wheel (R) about the steering axis (L), such that the following applies:

$$Target\ motor\ rotation\ rate_{steer}(t)\ =\ target\ motor\ rotation$$
$$rate_{M1steer}(t)$$
$$=\ -\ target\ motor\ rotation\ rate_{M2steer}(t)$$
$$=\ dwheel\ steering\ angle(t)\ \cdot$$
$$gear\ ratio_{steer}\ \cdot\ (2\Pi\ \cdot\ T_{A})^{-1}$$

**6.** Method according to the preceding claim, wherein
the change to the wheel steering angle results as follows:

$$dwheel\ steering\ angle(t)\ =\ wheel\ steering\ angle_{target}\ (t\ +$$
$$T_A)-\ wheel\ steering\ angle_{actual}(t)$$

with $T_A$ *as the call-up interval and wherein*

$$wheel\ steering\ angle_{actual}(t)\ =\ (motor\ position_{M1}(t)\ -\ motor$$
$$position_{M2}(t))\ \cdot\ (2\ \cdot\ gear\ ratio_{steer}).$$

**7.** Apparatus with an application electronics system (50) and at least two wheel drive modules, each comprising a wheel (R), a superimposition gear unit (G), a central electronics system (30) and a first electric motor (M1) and a second electric motor (M2),

wherein the application electronics system (50) and each central electronics system (30) are configured such that the apparatus can be controlled according to the method according to one of the preceding claims, wherein
the first and second electric motor (M1, M2) are designed to drive the wheel (R) simultaneously by means of the superimposition gear unit (G) about a wheel axle (A) and to steer the wheel about a steering axis (L) which is orthogonal to the wheel axle (A),
the wheel drive module comprises a first motor electronics system (10) for controlling the first electric motor (M1) and a second electronics system (20) for driving the second electric motor (M2) and a central electronics system (30), which is connected to the first and second motor electronics system (10, 20) so as to facilitate a signal exchange, and wherein
the wheel drive module comprises a control logic for controlling the first and second electric motor (M1, M2) for driving the wheel (R) about the wheel axle (A) and steering the wheel (R) about the steering axis (L),
which logic is provided by the first and second motor electronics system (10, 20), the central electronics system (30) and the application electronics system (50) which is connected to the central electronics system (30) so as to facilitate a signal exchange, wherein
the control logic is designed to determine the electrical control signals for the first and second electric motor (M1, M2) from the target wheel values and to transmit the control signals to the first and/or second electric motor (M1, M2).

**Revendications**

**1.** Procédé de commande d'un dispositif ayant au moins deux modules d'entraînement de roue, qui ont chacun un premier moteur (M1) électrique et un deuxième moteur (M2) électrique et comprennent chacun une roue (R) et une transmission (G) de superposition,

dans lequel la roue (R) peut, au moyen de la transmission (G) de superposition, être entraînée, autour d'un axe (A) de roue conjointement, par le premier et par le deuxième moteurs (M1, M2) électriques et être dirigée, autour d'un axe (L) de direction orthogonal à l'axe (A) de la roue, dans lequel
une électronique (50) d'application transmet, à chaque module d'entraînement de roue, respectivement seulement des valeurs de consigne de roue,
dans lequel une électronique (30) centrale respective du module respectif d'entraînement de roue détermine, à partir de valeurs de consigne de roue, qui caractérisent l'entraînement et/ou la conduite de la roue (R), des signaux électriques de commande pour la commande du premier et du deuxième moteurs (M1, M2) électriques, dans lequel
les valeurs de consigne de roue sont un angle de direction de consigne de roue et un régime de consigne de roue ou une vitesse de consigne de roue ou un couple de consigne de roue et dans lequel
les valeurs de consigne de roue sont déterminées à partir d'un chemin parcouru par la roue (R) ou par le module d'entraînement de roue et d'une vitesse de la roue (R) ou du module d'entraînement de roue le long du chemin, dans lequel le chemin prend en compte la voie parcourue et le tracé de la voie.

2. Procédé suivant la revendication 1, dans lequel
à partir des signaux de commande du premier et du deuxième moteurs (M1, M2) électriques, on détermine, par une commande de moteur associée à respectivement le premier ou le deuxième moteur (M1, M2) électrique, un régime de consigne de moteur, une position de consigne de moteur ou un couple de consigne de moteur et on commande le moteur (M1, M2) électrique respectivement jusqu'à l'obtention du régime de consigne de moteur ou de la position de consigne de moteur ou du couple de consigne de moteur.

3. Procédé suivant la revendication précédente, dans lequel
on détermine le régime de consigne de moteur du moteur (M1, M2) électrique respectif, à partir d'un premier régime de consigne de moteur pour l'obtention d'une vitesse de déplacement et d'un deuxième régime de consigne de moteur pour l'obtention d'un angle de direction, de manière à avoir :

$$régime\ de\ consigne\ de\ moteur_{M1}(t) =$$
$$régime\ de\ consigne\ de\ moteur/_{circulation}(t)+$$
$$régime\ de\ consigne\ de\ moteur/_{direction}(t)$$

et

$$régime\ de\ consigne\ de\ moteur_{M2}(t) =$$
$$régime\ de\ consigne\ de\ moteur/_{circulation}(t)-$$
$$régime\ de\ consigne\ de\ moteur/_{direction}(t).$$

4. Procédé suivant la revendication précédente, dans lequel
le régime de consigne de moteur pour atteindre une vitesse de circulation pour le premier et le deuxième moteurs (M1, M2) pour un même rapport de transmission de la transmission (G) de superposition est égal pour le premier et le deuxième moteurs (M1, M2) électriques et se détermine, en particulier à partir d'un régime de consigne de la roue (R) et du rapport de transmission de la transmission (G) de superposition, de manière à avoir :

$$régime\ de\ consigne\ de\ moteur/_{circulation}(t) = régime\ de\ consigne$$
$$de\ roue/(t)\bullet rapport\ de\ transmission_{circulation}.$$

5. Procédé suivant la revendication 3 ou 4 précédente, dans lequel
le régime de consigne de moteur pour atteindre l'angle de direction, pour le deuxième moteur (M2) électrique pour un même rapport de transmission de la transmission (G) de superposition pour le premier et le deuxième moteurs (M1, M2) électriques, est la valeur négative du régime de consigne de moteur pour l'obtention de l'angle de direction pour le premier moteur (M1) électrique et le régime de consigne de moteur pour atteindre l'angle de direction pour le premier moteur (M1) électrique est déterminé à partir d'une variation de l'angle de direction de la roue (R) autour de l'axe (L) de direction, de manière à avoir :

$$régime\ de\ consigne\ de\ moteur/_{direction}(t)$$
$$= régime\ de\ consigne\ de\ moteur/_{M1direction}(t)$$
$$= -\ régime\ de\ consigne\ de\ moteur/_{M2direction}(t)$$
$$= d\ angle\ de\ direction\ de\ roue/(t)\bullet rapport\ de\ transmis\text{--}$$
$$sion_{direction}\bullet (2\pi\bullet T_A)^{-1}.$$

6. Procédé suivant l'une des revendications précédentes, dans lequel
on obtient la variation de l'angle de direction de roue de la manière suivante :

$$d \; angle \; de \; direction \; de \; roue(t) = angle \; de \; direction \; de \; roue/_{consigne}(t+T_A) - angle \; de \; direction \; de \; roue/_{réel}(t)$$

avec $T_A$ comme intervalle d'appel et dans lequel

$$angle \; de \; direction \; de \; roue/_{réel}(t)=(position \; du \; moteur_{M1}(t)- position \; du \; moteur_{M2}(t)) \cdot (2 \cdot rapport \; de \; transmission_{direction}).$$

7. Installation comprenant une électronique (50) d'application et au moins deux modules d'entraînement de roue, comprenant chacun une roue (R), une transmission (G) de superposition, une électronique (30) centrale ainsi qu'un premier moteur (M1) et un deuxième moteur (M2),

dans laquelle l'électronique (50) d'application et chaque électronique (30) centrale sont agencées de manière à ce que l'installation puisse être commandée selon le procédé selon des revendications précédentes,
dans laquelle
le premier et le deuxième moteurs (M1, M2) électriques sont constitués de manière à entraîner la roue (R) conjointement au moyen de la transmission (G) de superposition autour d'un axe (A) de roue et à la diriger autour d'un axe (L) de direction orthogonal à l'axe (A) de la roue,
le module d'entraînement de roue comprend une première électronique (10) de moteur du premier moteur (M1) électrique et une deuxième électronique (20) de moteur pour l'entraînement du deuxième moteur (M2) électrique ainsi qu'une électronique (30) centrale, qui est reliée à la première et à la deuxième électroniques (10, 20) de moteur en permettant un échange de signaux, et dans laquelle
le module d'entraînement de roue comprend une logique de commande pour la commande du premier et du deuxième moteurs (M1, M2) électriques pour l'entraînement de roue (R) autour de l'axe (A) de la roue et la direction de la roue (R) autour de l'axe (L) de direction,
laquelle est mise à disposition par la première et la deuxième électroniques (10, 20) de moteur, l'électronique (30) centrale, l'électronique (50) d'application, qui est reliée à l'électronique (30) centrale en permettant un échange de signaux, dans laquelle
la logique de commande est constituée pour déterminer, à partir des valeurs de consigne de roue, des signaux électriques de commande du premier et du deuxième moteurs (M1, M2) électriques et pour transmettre les signaux de commande au premier et/ou au deuxième moteurs (M1, M2) électriques.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016007445 A1

- DE 202008004190 U1